(19) Europäisches Patentamt
European Patent Office
Office européen des brevets

(11) EP 4 497 770 A1

(12) EUROPEAN PATENT APPLICATION

(43) Date of publication:
**29.01.2025 Bulletin 2025/05**

(21) Application number: **24191113.0**

(22) Date of filing: **26.07.2024**

(51) International Patent Classification (IPC):
***C08G 63/08*** *(2006.01)* ***C08G 63/91*** *(2006.01)*
*C08F 220/20* *(2006.01)*

(52) Cooperative Patent Classification (CPC):
**C08G 63/08; C08G 63/912;** C08F 220/20;
C08J 2367/04; C08J 2367/06

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.07.2023 TW 112128410**

(71) Applicant: **Largan Medical Co., Ltd.**
**Taichung City 408 (TW)**

(72) Inventors:
- **CHEN, Wei-Yuan**
  **408 Taichung City (TW)**
- **CHEN, Po-Tsun**
  **408 Taichung City (TW)**
- **CHEN, Rih-Sian**
  **408 Taichung City (TW)**
- **LU, Yi-Rou**
  **408 Taichung City (TW)**
- **HONG, Yu Jie**
  **408 Taichung City (TW)**
- **TENG, Chun-Hung**
  **408 Taichung City (TW)**

(74) Representative: **Berggren Oy**
**P.O. Box 16**
**Eteläinen Rautatiekatu 10A**
**00101 Helsinki (FI)**

# (54) POLYMER, COMPOSITION THEREOF AND PRODUCT THEREOF

(57) A polymer is a biodegradable polymer, and a constituent monomer of the polymer includes a 2-hydroxyethyl methacrylate, a lactide and a caprolactone. When an average molecular weight of the polymer is Mw, a degradation rate of the polymer on a 7th day is Dr7, and a time for the polymer to reach a 1% degradation rate is TDrlp, the specific conditions related to Mw and Dr7 or TDrlp, respectively, can be satisfied.

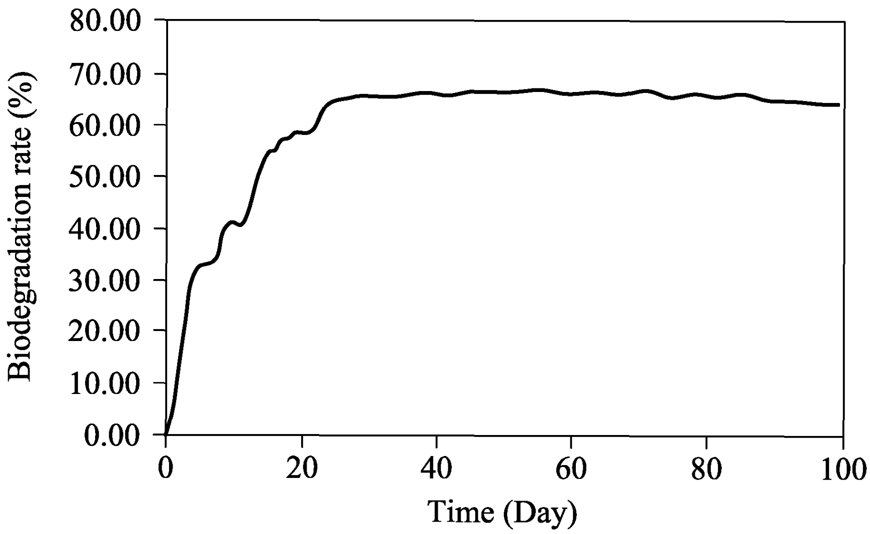


Fig. 1

EP 4 497 770 A1

## Description

## BACKGROUND

Technical Field

The present disclosure relates to a polymer, a composition thereof and a product thereof. More particularly, the present disclosure relates to a polymer, a composition thereof and a product thereof with a biodegradable property.

Description of Related Art

Polyhydroxyethyl methacrylate is widely used in various fields due to its advantages of high biocompatibility and high moisture content, and it is applied to the products such as adhesives, sanitary products, facial masks, packaging materials, contact lenses and medical equipment, etc. However, 2-hydroxyethyl methacrylate is a non-biodegradable material and is often copolymerized with other non-biodegradable materials to form products, the said products are easy to accumulate in the environment due to improper handling, and thus the ecological environment will be damaged therefrom. For example, 2-hydroxyethyl methacrylate can be copolymerized with methyl methacrylate and N-vinyl-2-pyrrolidinone to form soft contact lenses. Because the aforementioned three monomers are non-biodegradable no matter before or after the copolymerization, non-biodegradable wastes will be produced after the soft contact lenses are discarded, resulting in the serious damage to the ecological environment. Further, although 2-hydroxyethyl methacrylate, lactide and caprolactone are copolymerized to form novel medical material currently, the molecular weight of the novel medical material is too large, and thus the stretch value thereof is too high to satisfy the requirements of high softness.

Therefore, materials that have been developed today cannot meet the needs of use, so small molecule biodegradable materials are necessary to be actively developed.

## SUMMARY

According to one aspect of the present disclosure, a polymer is a biodegradable polymer, and a constituent monomer of the polymer includes a 2-hydroxyethyl methacrylate, a lactide and a caprolactone. When an average molecular weight of the polymer is Mw, and a degradation rate of the polymer on a 7th day is Dr7, the following conditions are satisfied: Mw ≤ 50000 g/mole; and 5% ≤ Dr7.

According to the polymer of the aforementioned aspect, the constituent monomer can be selected from a group consisting of the 2-hydroxyethyl methacrylate, the lactide and the caprolactone.

According to the polymer of the aforementioned aspect, when the average molecular weight of the polymer is Mw, the following condition can be satisfied: 300 g/mole ≤ Mw.

According to the polymer of the aforementioned aspect, when a pyrolysis temperature of the polymer is Pt, the following condition can be satisfied: 100°C ≤ Pt.

According to the polymer of the aforementioned aspect, when a viscosity of the polymer is Vi, the following condition can be satisfied: 1000 cP ≤ Vi.

According to the polymer of the aforementioned aspect, when a dissolution rate in water of the polymer is Sw, the following condition can be satisfied: Sw ≤ 5.00%.

According to the polymer of the aforementioned aspect, when a molecular size of the polymer is Sp, the following condition can be satisfied: Sp ≤ 30 μm.

According to the polymer of the aforementioned aspect, when a pyrolysis temperature after curing of the polymer is PtC, the following condition can be satisfied: 100°C ≤ PtC.

According to the polymer of the aforementioned aspect, when a degradation rate of the polymer on a 28th day is Dr28, the following condition can be satisfied: 10% ≤ Dr28.

According to the polymer of the aforementioned aspect, when a time for the polymer to reach a 1% degradation rate is TDr1p, the following condition can be satisfied: TDr1p ≤ 7 days.

According to the polymer of the aforementioned aspect, when a time for the polymer to reach a 50% degradation rate is TDr50p, the following condition can be satisfied: TDr50p ≤ 30 days.

According to another aspect of the present disclosure, a composition includes the polymer of the aforementioned aspect.

According to another aspect of the present disclosure, a product includes the composition of the aforementioned aspect.

According to another aspect of the present disclosure, a polymer is a biodegradable polymer, and a constituent monomer of the polymer includes a 2-hydroxyethyl methacrylate and at least one of a lactide and a caprolactone. A monomer proportion of the 2-hydroxyethyl methacrylate in the polymer is smaller than a monomer proportion of the lactide

in the polymer or a monomer proportion of the caprolactone in the polymer. When an average molecular weight of the polymer is Mw, and a time for the polymer to reach a 1% degradation rate is TDr1p, the following conditions are satisfied: Mw ≤ 50000 g/mole; and TDr1p ≤ 7 days.

According to the polymer of the aforementioned aspect, the constituent monomer of the polymer can be composed of the 2-hydroxyethyl methacrylate and at least one of the lactide and the caprolactone.

According to the polymer of the aforementioned aspect, when the average molecular weight of the polymer is Mw, the following condition can be satisfied: 300 g/mole ≤ Mw.

According to the polymer of the aforementioned aspect, when a pyrolysis temperature of the polymer is Pt, the following condition can be satisfied: 100°C ≤ Pt.

According to the polymer of the aforementioned aspect, when a viscosity of the polymer is Vi, the following condition can be satisfied: 1000 cP ≤ Vi.

According to the polymer of the aforementioned aspect, when a dissolution rate in water of the polymer is Sw, the following condition can be satisfied: Sw ≤ 5.00%.

According to the polymer of the aforementioned aspect, when a molecular size of the polymer is Sp, the following condition can be satisfied: Sp ≤ 50 μm.

According to the polymer of the aforementioned aspect, when a pyrolysis temperature after curing of the polymer is PtC, the following condition can be satisfied: 100°C ≤ PtC.

According to the polymer of the aforementioned aspect, when a degradation rate of the polymer on a 7th day is Dr7, the following condition can be satisfied: 5% ≤ Dr7.

According to the polymer of the aforementioned aspect, when a degradation rate of the polymer on a 28th day is Dr28, the following condition can be satisfied: 10% ≤ Dr28.

According to the polymer of the aforementioned aspect, when a time for the polymer to reach a 50% degradation rate is TDr50p, the following condition can be satisfied: TDr50p ≤ 30 days.

According to the polymer of the aforementioned aspect, when the average molecular weight of the polymer is Mw, the degradation rate of the polymer on the 7th day is Dr7, the degradation rate of the polymer on the 28th day is Dr28, the pyrolysis temperature of the polymer is Pt, the dissolution rate in water of the polymer is Sw, and the pyrolysis temperature after curing of the polymer is PtC, the following conditions can be satisfied: 500 g/mole ≤ Mw ≤ 10000 g/mole; 20% ≤ Dr7 ≤ 80%; 30% ≤ Dr28 ≤ 100%; 200°C ≤ Pt; Sw ≤ 0.50%; and 200°C ≤ PtC.

According to another aspect of the present disclosure, a composition includes the polymer of the aforementioned aspect.

According to another aspect of the present disclosure, a product includes the composition of the aforementioned aspect.

## BRIEF DESCRIPTION OF THE DRAWINGS

The present disclosure can be more fully understood by reading the following detailed description of the embodiment, with reference made to the accompanying drawings as follows:

Fig. 1 is a relationship diagram between the biodegradation rate and the time of the polymer according to Example 1.

Fig. 2 is relationship diagram between the biodegradation rate and the time of the polymer according to Example 2.

## DETAILED DESCRIPTION

According to one aspect of the present disclosure, a polymer is provided. The polymer is a biodegradable polymer, and a constituent monomer of the polymer includes a 2-hydroxyethyl methacrylate (HEMA), a lactide and a caprolactone. Therefore, a polymer which is produced based on the 2-hydroxyethyl methacrylate is provided in the present disclosure, and by the arrangement that the 2-hydroxyethyl methacrylate, the lactide and the caprolactone are used as the constituent monomers, the polymer having the biodegradable property can be obtained, so that it is favorable for avoiding the generation of wastes and then accumulating in the environment after the discard of the products made of the polymer, and the damage to the ecological environment can be reduced.

According to another aspect of the present disclosure, a polymer is provided. The polymer is a biodegradable polymer, and a constituent monomer of the polymer includes a 2-hydroxyethyl methacrylate and at least one of a lactide and a caprolactone. A monomer proportion of the 2-hydroxyethyl methacrylate in the polymer is smaller than a monomer proportion of the lactide in the polymer or a monomer proportion of the caprolactone in the polymer. Therefore, a polymer which is produced based on the 2-hydroxyethyl methacrylate is provided in the present disclosure, and by the arrangement that the 2-hydroxyethyl methacrylate and at least one of the lactide and the caprolactone are used as the constituent monomers, the polymer having the biodegradable property can be obtained, so that it is favorable for avoiding the

generation of wastes and then accumulating in the environment after the discard of the products made of the polymer, and the damage to the ecological environment can be reduced.

When an average molecular weight of the polymer is Mw, the following condition can be satisfied: Mw ≤ 50000 g/mole. Therefore, by designing a smaller average molecular weight of the polymer, it is favorable for obtaining a smaller stretch value of the polymer, and thus the softness of the polymer can be enhanced. Furthermore, the following condition can be satisfied: Mw < 100000 g/mole. Furthermore, the following condition can be satisfied: 100 g/mole ≤ Mw ≤ 80000 g/mole. Furthermore, the following condition can be satisfied: 300 g/mole ≤ Mw ≤ 50000 g/mole. Furthermore, the following condition can be satisfied: 500 g/mole ≤ Mw ≤ 30000 g/mole. Furthermore, the following condition can be satisfied: 1000 g/mole ≤ Mw ≤ 20000 g/mole. Furthermore, the following condition can be satisfied: 4000 g/mole ≤ Mw ≤ 10000 g/mole. Furthermore, the following condition can be satisfied: 3000 g/mole ≤ Mw ≤ 5000 g/mole. Furthermore, the following condition can be satisfied: 300 g/mole ≤ Mw. Therefore, by designing a specific lower limit of the average molecular weight of the polymer, it is favorable for preventing the polymer from entering the cell membrane, and the biological safety of the polymer can be increased.

When a degradation rate of the polymer on a 7th day is Dr7, the following condition can be satisfied: 5% ≤ Dr7. Therefore, by satisfying the degradation rate of the polymer on the 7th day, it is favorable for enhancing the initial decomposition effect of the polymer. Furthermore, the following condition can be satisfied: 10% ≤ Dr7 ≤ 100%. Furthermore, the following condition can be satisfied: 15% ≤ Dr7 ≤ 90%. Furthermore, the following condition can be satisfied: 20% ≤ Dr7 ≤ 80%. Furthermore, the following condition can be satisfied: 25% ≤ Dr7 ≤ 70%. Furthermore, the following condition can be satisfied: 30% ≤ Dr7 ≤ 60%. Furthermore, the following condition can be satisfied: 33% ≤ Dr7 ≤ 50%.

When a time for the polymer to reach a 1% degradation rate is TDr1p, the following condition can be satisfied: TDr1p ≤ 7 days. Therefore, by limiting the time for the polymer to reach the 1% degradation rate, a rapid decomposition of the polymer can be ensured. Furthermore, the following condition can be satisfied: TDr1p ≤ 6 days. Furthermore, the following condition can be satisfied: TDr1p ≤ 5 days. Furthermore, the following condition can be satisfied: TDr1p ≤ 4 days. Furthermore, the following condition can be satisfied: TDr1p ≤ 3 days. Furthermore, the following condition can be satisfied: TDr1p ≤ 2 days. Furthermore, the following condition can be satisfied: 0 day < TDr1p ≤ 1 day.

The constituent monomer of the polymer can be selected from a group consisting of the 2-hydroxyethyl methacrylate, the lactide and the caprolactone. Furthermore, the constituent monomer of the polymer can be composed of the 2-hydroxyethyl methacrylate and at least one of the lactide and the caprolactone. By the arrangement that the polymer is only composed of the 2-hydroxyethyl methacrylate, the lactide and the caprolactone, it is favorable for maximizing the degradation rate of the polymer.

When a pyrolysis temperature of the polymer is Pt, the following condition can be satisfied: 100°C ≤ Pt. Therefore, by satisfying the pyrolysis temperature of the polymer, it is favorable for stabilizing the structure of the polymer at high temperatures. Furthermore, the following condition can be satisfied: 120°C ≤ Pt ≤ 1000°C. Furthermore, the following condition can be satisfied: 150°C ≤ Pt ≤ 800°C. Furthermore, the following condition can be satisfied: 180°C ≤ Pt ≤ 500°C. Furthermore, the following condition can be satisfied: 200°C ≤ Pt ≤ 300°C. Furthermore, the following condition can be satisfied: 220°C ≤ Pt ≤ 280°C. Furthermore, the following condition can be satisfied: 240°C ≤ Pt ≤ 260°C. Furthermore, the following condition can be satisfied: 225°C ≤ Pt :5 250°C. Furthermore, the following condition can be satisfied: 200°C ≤ Pt.

When a viscosity of the polymer is Vi, the following condition can be satisfied: 1000 cP ≤ Vi. Therefore, by satisfying the viscosity of the polymer, a low flow ability of the polymer can be ensured, and it is favorable for setting the shape of the polymer. Furthermore, the following condition can be satisfied: 2000 cP ≤ Vi. Furthermore, the following condition can be satisfied: 3000 cP ≤ Vi. Furthermore, the following condition can be satisfied: 5000 cP ≤ Vi. Furthermore, the following condition can be satisfied: 10000 cP ≤ Vi ≤ 15000 cP. Furthermore, the following condition can be satisfied: 12000 cP ≤ Vi ≤ 13000 cP.

When a dissolution rate in water of the polymer is Sw, the following condition can be satisfied: Sw ≤ 5.00%. Therefore, by limiting the dissolution rate in water of the polymer, the failure of the polymer due to damping or watering can be avoided, and it is favorable for increasing the waterproofness of the polymer. Furthermore, the following condition can be satisfied: Sw ≤ 3.00%. Furthermore, the following condition can be satisfied: Sw ≤ 1.00%. Furthermore, the following condition can be satisfied: Sw ≤ 0.50%. Furthermore, the following condition can be satisfied: Sw ≤ 0.30%. Furthermore, the following condition can be satisfied: 0% ≤ Sw ≤ 0.10%.

When a molecular size of the polymer is Sp, the following condition can be satisfied: Sp ≤ 30 μm. Therefore, by limiting the molecular size of the polymer, the molecules in the polymer can be dispersed evenly, and it is favorable for enhancing the arranging uniformity of the polymer. Furthermore, the following condition can be satisfied: Sp ≤ 60 μm. Furthermore, the following condition can be satisfied: Sp ≤ 50 μm. Furthermore, the following condition can be satisfied: 0 μm < Sp ≤ 30 μm. Furthermore, the following condition can be satisfied: 5 μm ≤ Sp ≤ 20 μm. Furthermore, the following condition can be satisfied: 10 μm ≤ Sp ≤ 15 μm.

When a pyrolysis temperature after curing of the polymer is PtC, the following condition can be satisfied: 100°C ≤ PtC. Therefore, by satisfying the pyrolysis temperature after curing of the polymer, it is favorable for stabilizing the structure

of the polymer at high temperatures. Furthermore, the following condition can be satisfied: 120°C ≤ PtC ≤ 1000°C. Furthermore, the following condition can be satisfied: 150°C ≤ PtC ≤ 800°C. Furthermore, the following condition can be satisfied: 180°C ≤ PtC ≤ 500°C. Furthermore, the following condition can be satisfied: 200°C ≤ PtC ≤ 300°C. Furthermore, the following condition can be satisfied: 220°C ≤ PtC ≤ 280°C. Furthermore, the following condition can be satisfied: 240°C ≤ PtC ≤ 260°C. Furthermore, the following condition can be satisfied: 200°C ≤ PtC.

When a degradation rate of the polymer on a 28th day is Dr28, the following condition can be satisfied: 10% ≤ Dr28. Therefore, by satisfying the degradation rate of the polymer on the 28th day, it is favorable for enhancing the short-term decomposition effect of the polymer. Furthermore, the following condition can be satisfied: 20% ≤ Dr28. Furthermore, the following condition can be satisfied: 30% ≤ Dr28 ≤ 100%. Furthermore, the following condition can be satisfied: 40% ≤ Dr28 ≤ 90%. Furthermore, the following condition can be satisfied: 50% ≤ Dr28 ≤ 80%. Furthermore, the following condition can be satisfied: 60% ≤ Dr28 ≤ 70%.

When a degradation rate of the polymer on a 56th day is Dr56, the following condition can be satisfied: 20% ≤ Dr56. Therefore, by satisfying the degradation rate of the polymer on the 56th day, it is favorable for enhancing the mid-term decomposition effect of the polymer. Furthermore, the following condition can be satisfied: 25% ≤ Dr56. Furthermore, the following condition can be satisfied: 35% ≤ Dr56 ≤ 100%. Furthermore, the following condition can be satisfied: 45% ≤ Dr56 ≤ 90%. Furthermore, the following condition can be satisfied: 55% ≤ Dr56 ≤ 80%. Furthermore, the following condition can be satisfied: 65% ≤ Dr56 ≤ 70%.

When a degradation rate of the polymer on a 99th day is Dr99, the following condition can be satisfied: 20% ≤ Dr99. Therefore, by satisfying the degradation rate of the polymer on the 99th day, it is favorable for enhancing the long-term decomposition effect of the polymer. Furthermore, the following condition can be satisfied: 25% ≤ Dr99. Furthermore, the following condition can be satisfied: 35% ≤ Dr99 ≤ 100%. Furthermore, the following condition can be satisfied: 45% ≤ Dr99 ≤ 90%. Furthermore, the following condition can be satisfied: 55% ≤ Dr99 ≤ 80%. Furthermore, the following condition can be satisfied: 60% ≤ Dr99 ≤ 70%.

When a time for the polymer to reach a 50% degradation rate is TDr50p, the following condition can be satisfied: TDr50p ≤ 30 days. Therefore, by limiting the time for the polymer to reach the 50% degradation rate, it is favorable for enhancing the decomposition efficiency of the polymer. Furthermore, the following condition can be satisfied: 0 day < TDr50p ≤ 30 days. Furthermore, the following condition can be satisfied: 1 day ≤ TDr50p ≤ 28 days. Furthermore, the following condition can be satisfied: 2 days ≤ TDr50p ≤ 25 days. Furthermore, the following condition can be satisfied: 3 days ≤ TDr50p ≤ 22 days. Furthermore, the following condition can be satisfied: 5 days ≤ TDr50p ≤ 20 days. Furthermore, the following condition can be satisfied: 8 days ≤ TDr50p ≤ 18 days.

The structural formula of the polymer of the present disclosure can be represented by a structure of Formula (I) or a structure of Formula (II):

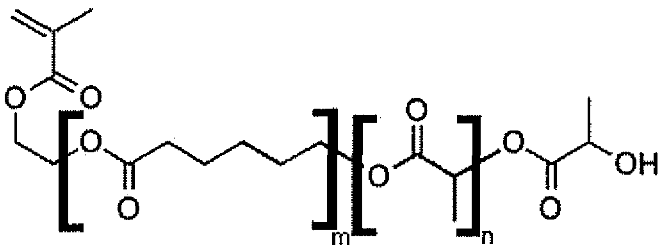

Formula (I); or

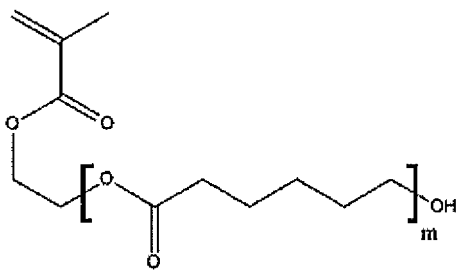

Formula (II).

In the structural formula of the polymer of the present disclosure, the partial structure in brackets and labeled by "m" and "n" on the left side of the brackets means that the polymer includes multiple duplicate copies of the said partial structure therein, wherein "m" and "n" respectively represent the duplicate times, and "m" and "n" are respectively a positive integer. Further, the structural formulas shown in Formula (I) and Formula (II) only represent the possible bonding arrangement of the polymer, and not all products obtained from the same polymerization reaction have the same structure exactly. Thus, the actual structure of the polymer may also be different from the structural formulas shown in Formula (I) or Formula (II).

The constituent monomer of the polymer of the present disclosure can include the 2-hydroxyethyl methacrylate, the lactide and the caprolactone, and the ratio among the monomer proportion of the 2-hydroxyethyl methacrylate, the monomer proportion of the lactide, and the monomer proportion of the caprolactone in the polymer can be 1:2~7:2~5. For example, the monomer proportion of the 2-hydroxyethyl methacrylate in the polymer is smaller than the monomer proportion of the lactide in the polymer and the monomer proportion of the caprolactone in the polymer, wherein the ratio among the monomer proportion of the 2-hydroxyethyl methacrylate in the polymer, the monomer proportion of the lactide in the polymer and the monomer proportion of the caprolactone in the polymer can be 1:2:2, 1:2:3, 1:3:3, 1:4:3, 1:4:4, 1:5:4, 1:5:5, 1:6:5, or 1:7:5, and the ratio among the monomers can also be non-integer. The ratio between the monomer proportion of the 2-hydroxyethyl methacrylate in the polymer and the monomer proportion of the lactide in the polymer can be 1:1~1:100. For example, the ratio between the monomer proportion of the 2-hydroxyethyl methacrylate in the polymer and the monomer proportion of the lactide in the polymer can be 1:1, 1:2, 1:5, 1:10, 1:20, 1:30, 1:50, 1:70, 1:75, or 1:100, and the ratio between the monomers can also be non-integer. The ratio between the monomer proportion of the 2-hydroxyethyl methacrylate in the polymer and the monomer proportion of the caprolactone in the polymer can be 1:1~1:100. For example, the ratio between the monomer proportion of the 2-hydroxyethyl methacrylate in the polymer and the monomer proportion of the caprolactone in the polymer can be 1:1, 1:2, 1:5, 1:10, 1:20, 1:30, 1:50, 1:70, 1:75, or 1:100, and the ratio between the monomers can also be non-integer, but the present disclosure is not limited thereto. The catalyst of the polymerization of the polymer can be Tin(II) 2-Ethylhexanoate ($Sn(Oct)_2$), Tin(II) chloride ($SnCl_2$), Tin(II) sulfate, ($SnSO_4$), Dibutyltin oxide (DBTO), or Dibutyltin dilaurate (DBTL). The adding proportion of the 2-hydroxyethyl methacrylate and the catalyst during the polymerization can be 1:0.001~1:1000, but the present disclosure is not limited thereto.

The polymer of the present disclosure can be a curable polymer having the photocurable property or the thermal curable property. The photocurable property means that the polymer is gradually cured by exposing it to light (such as ultraviolet light, visible light, blue light, green light, or red light), wherein the curing degree of the polymer will be affected by the time exposure to light, and thus the polymer can be a viscous fluid, colloidal or solid after illumination. The thermal curable property means that the polymer is gradually cured by heating, wherein the curing degree of the polymer will be affected by the heating time, and thus the polymer can be a viscous fluid, colloidal or solid after heating. Further, if the polymer of the present disclosure is not clearly stated as to whether it has been cured or not, the polymer is usually referred to before curing.

The average molecular weight of the polymer of the present disclosure is the number-average molecular weight of the overall molecules of the polymer during the measurement, and the calculating formula thereof is: ($\Sigma$ molecular weight) / total number of molecules.

The pyrolysis temperature of the polymer of the present disclosure is the temperature of the polymer starting to pyrolysis.

The viscosity of the polymer of the present disclosure is the stickiness of the polymer, wherein the viscosity can represent the flow ability of the polymer, and the measuring condition thereof is that the temperature is 25°C and the humidity is 50%.

The dissolution rate in water of the polymer of the present disclosure is the dissolution rate of the polymer in the water as the solvent. The dissolution rate in water is measured by adding a very small amount of the polymer as a solute to the water slowly until the polymer cannot be dissolved anymore, and the measuring condition thereof is that the temperature is 25°C and the humidity is 50%.

The molecular size of the polymer of the present disclosure is the median of the molecular diameters of the overall molecules of the polymer.

The polymer of the present disclosure can be a biodegradable polymer, and the biodegradable property of the polymer means that the polymer can be gradually decomposed by microorganisms in specific environments.

The degradation rate of the polymer of the present disclosure is the results obtained by the standard test method ASTM-D5338. The degradation rate is calculated based on weight as a unit, wherein the test sample and the activated sludge (fertilizer) are mixed at a weight ratio of 1:6, and then the perlite is added to keep the moisture content in the degradation bottle at about 50%. The degradation bottle is kept at 58±2°C and observed continuously for 180 days. The main ingredients of the activated sludge include livestock manure, soybean flour, bagasse, sawdust, wheat bran, and mushroom compost, and the ingredients of the perlite are shown in Table 1.

Table 1

| Material | $SiO_2$ | $Al_2O_3$ | $Fe_2O_3$ | CaO | $K_2O$ | $Na_2O$ | MgO | $H_2O$ |
|---|---|---|---|---|---|---|---|---|
| Content (%) | 68~74 | ~12 | 0.5~3.6 | 0.7~1.0 | 2~3 | 4~5 | 0.3 | 2.3~6.4 |

During the testing and monitoring process, 0.1 M KOH aqueous solution is prepared freshly and dispense it into 50 mL PP jars. The PP jar is placed in the degradation bottle, and the degradation bottle is further placed in an incubator (58 ±2°C) for incubation. The KOH aqueous solution will absorb the $CO_2$ released from the degradation product when it is decomposed. The replacement frequency of KOH is 6 times/week in the early stage (1-30 days) of the degradation test, and it will change to 2 times/week after one month of the degradation test until reaching 180 days. Further, a total time of the degradation test also can be longer than 180 days. The KOH collected therefrom is detected by a pH meter to obtain a pH value, and the pH value is compared with that of a control group (the 0.1 M KOH aqueous solution is placed in the incubator without degradation test) so as to obtain a hydrogen ion concentration, and then the hydrogen ion concentration is used to calculate the weight of $CO_2$ and estimate the degradation rate. The calculating formula as above-mentioned is: Change in hydroxide concentration = Hydroxide concentration of Control group - Hydroxide concentration of Testing group = Hydrogen ion concentration; Weight of $CO_2$ (Unit: mg) = Hydrogen ion concentration × 44/2 × 50 mL (44 is the molecular weight of $CO_2$, 2 is the equilibrium coefficient of carbon dioxide reaction, and 50 mL is the volume of aqueous solution); and Mineralization (decomposition) percentage = Change of weight of $CO_2$ / Theoretical carbon dioxide content of the composition that is completely decomposed × 100%.

The degradation rate of the polymer on the nth day of the present disclosure is the degradation rate of the polymer obtained on the nth day measured by the standard test method ASTM-D5338, wherein the nth day can be the 7th day, the 8th day, the 9th day, the 10th day, the 14th day, the 21st day, the 24th day, the 25th day, the 26th day, the 28th day, the 29th day, the 30th day, the 31st day, the 35th day, the 42nd day, the 49th day, the 52nd day, the 56th day, the 59th day, the 63rd day, the 66th day, the 70th day, the 73rd day, the 77th day, the 80th day, the 84th day, the 87th day, the 91st day, the 94th day, the 98th day, the 101st day, the 105th day, the 140th day, the 150th day, the 154th day, the 157th day, the 175th day, the 178th day, or the 180th day, or the degradation rate can be the degradation rate obtained on any one of the 1st day to the 180th day. For example, Dr28 refers to the degradation rate of the polymer on the 28th day, and it can also be defined according to the above rules, such as that Dr21 refers to the degradation rate of the polymer on the 21st day and so on, but the present disclosure is not limited thereto.

The pyrolysis temperature after curing of the polymer of the present disclosure has the curing conditions shown as follows. The polymer is placed at a bottom of a sealed box at room temperature and then cured with a light which emits from the top of the box for 5 minutes. If the polymer does not form a cured state, the time exposure to light is increased by 1 minute each time until curing. If the polymer still cannot be cured after 10 minutes exposure to light, a curing initiator OX101 is added to the polymer with a final concentration of 0.1%, and the time exposure to light is 10 seconds each time until curing. The lamp used for curing is a 9-watt UV lamp from Chingtek UV division, the model thereof is UV-015-09W-365N. The size of the sealed box at room temperature is 88.4 cm (length) × 70.2 cm (width) × 76.4 cm (height).

Each of the aforementioned features of the polymer of the present disclosure can be utilized in numerous combinations, so as to achieve the corresponding functionality.

According to further another aspect of the present disclosure, a composition includes the polymer according to the aforementioned aspect.

The composition of the present disclosure can be a substrate, a curing material, an adhesive material, a repair material, a coating material, a packaging material, and an encapsulation material, but the present disclosure is not limited thereto. The coating material includes an adhesive, an adhesive tape, a glue, a curing adhesive, and an oxidation adhesive. The coating material can be sticky or can form a coating layer by light curing. The coating material can bond with the substances, the elements, or the objects in contact with thereto by exposing to light. Further, the coating material can be applied to electronic products, packaging, clothing, containers and various assembled products, but the present

disclosure is not limited thereto.

According to further another aspect of the present disclosure, a product includes the composition according to the aforementioned aspect.

The product of the present disclosure can be daily clothing, medical equipment, electronic devices and equipment, transportation vehicles, furniture and household appliances, tableware, containers, and disposable products, etc. The daily clothing can be clothes, pants, coats, jackets, underwear, socks, shoes, hats, scarves, etc. The medical equipment can be dental filling materials, biological tissue scaffolds, biological tissue fillers, biological sutures, surgical sutures, surgical needles, surgical membranes, tissue adhesive patches, tissue adhesive glues, tissue adhesive tapes, bone plates, bone nails, tissue suture nails, biological suture anchors and other therapeutic equipment, the medical equipment can also be artificial tissues or artificial organs such as biological skeletons, artificial blood vessels, artificial cardiac catheters, artificial ligaments, artificial cartilage, etc., but the present disclosure is not limited thereto. The electronic devices and equipment can be mobile phones, smart bracelets, watches, cameras, laptops, desktop computer hosts, screens, mice, keyboards, batteries, clothing, etc., but the present disclosure is not limited thereto. The transportation vehicles can be bicycles, motorcycles, cars, buses, trains, high-speed rails, airplanes, boats, etc., but the present disclosure is not limited thereto. The furniture and household appliances can be tables, chairs, sofas, beds, TVs, air conditioning, refrigerators, air conditioner, microwaves, fans, induction cookers, etc., but the present disclosure is not limited thereto. The tableware can be knives, forks, chopsticks, bowls, plates, pots, straws, etc., but the present disclosure is not limited thereto. The containers can be bottles, bags, boxes, cases, cups, bowls, backpacks, handbags, etc., but the present disclosure is not limited thereto. The disposable products can be packaging films, composite papers, containers or storage devices, tableware, food packaging, strapping tapes, ropes, wrapping films, agricultural seedling cups and plates, mushroom bags, fertilizer bags, agricultural tapes or ties, agricultural tiles or mulching materials, agricultural plug trays, vegetable and fruit bags, agricultural border covering films, drug carriers, inorganic mixtures, biological experiment petri dishes, biological experiment containers, biological experiment micropipettes, biological experiment centrifuge tubes, experimental gloves, etc., but the present disclosure is not limited thereto.

According to the above descriptions, the specific embodiments and reference drawings thereof are given below so as to describe the present disclosure in detail.

<Example 1>

The polymer of Example 1 is a biodegradable polymer, the constituent monomer of the polymer includes the 2-hydroxyethyl methacrylate, the lactide and the caprolactone, and the polymer of Example 1 has the structure shown in Formula (I) as above-mentioned.

Table 2A shows the values of biodegradation rate of the polymer according to Example 1 on different days, and Fig. 1 is a relationship diagram between the biodegradation rate and the time of the polymer according to Example 1.

Table 2A

| Time (day) | Biodegradation rate (%) |
|---|---|
| 0 | 0.00 |
| 1 | 5.08 |
| 2 | 14.24 |
| 3 | 23.29 |
| 4 | 30.49 |
| 5 | 32.79 |
| 7 | 33.51 |
| 8 | 36.98 |
| 9 | 40.60 |
| 10 | 41.09 |
| 11 | 40.72 |
| 12 | 42.75 |
| 13 | 47.53 |
| 15 | 54.83 |

(continued)

| Table 2A | |
|---|---|
| Time (day) | Biodegradation rate (%) |
| 16 | 55.18 |
| 17 | 57.17 |
| 18 | 57.68 |
| 19 | 58.64 |
| 21 | 58.64 |
| 22 | 59.93 |
| 23 | 62.57 |
| 24 | 64.46 |
| 25 | 64.93 |
| 26 | 65.15 |
| 28 | 65.84 |
| 31 | 65.66 |
| 35 | 65.88 |
| 38 | 66.34 |
| 42 | 65.94 |
| 45 | 66.71 |
| 49 | 66.47 |
| 52 | 66.79 |
| 56 | 67.02 |
| 59 | 66.32 |
| 64 | 66.67 |
| 67 | 66.19 |
| 71 | 67.00 |
| 74 | 65.80 |
| 78 | 66.32 |
| 81 | 65.78 |
| 85 | 66.44 |
| 88 | 65.19 |
| 92 | 64.97 |
| 95 | 64.58 |
| 99 | 64.36 |

The properties of the constituent monomers of the polymer and the polymer according to Example 1 are shown in Table 2B, wherein the average molecular weight of the polymer is Mw, the pyrolysis temperature of the polymer is Pt, the viscosity of the polymer is Vi, the dissolution rate in water of the polymer is Sw, the molecular size of the polymer is Sp, the pyrolysis temperature after curing of the polymer is PtC, the degradation rate of the polymer on the 7th day is Dr7, the degradation rate of the polymer on the 28th day is Dr28, the degradation rate of the polymer on the 56th day is Dr56, the degradation rate of the polymer on the 99th day is Dr99, the time for the polymer to reach the 1% degradation rate is TDr1p, and the time for the polymer to reach the 50% degradation rate is TDr50p.

| Table 2B | |
|---|---|
| Constituent monomer 1 | 2-Hydroxyethyl Methacrylate (HEMA) |
| Constituent monomer 2 | Lactide |
| Constituent monomer 3 | Caprolactone |
| Mw (g/mol) | 3128 |
| Pt (°C) | 209 |
| Vi (cP) | 13373 |
| Sw (%) | 0.09 |
| Sp (nm) | 12.7 |
| PtC (°C) | 222 |
| Dr7 (%) | 33.51 |
| Dr28 (%) | 65.84 |
| Dr56 (%) | 66.79 |
| Dr99 (%) | 64.36 |
| TDr1p (day) | 1 |
| TDr50p (day) | 15 |

The definitions of parameters shown in tables of the following examples are the same as those shown in Table 2B of Example 1, so that those will not be described again.

<Example 2>

The polymer of Example 2 is a biodegradable polymer, the constituent monomer of the polymer includes the 2-hydroxyethyl methacrylate, the lactide and the caprolactone, and the polymer of Example 2 has the structure shown in Formula (I) as above-mentioned.

Table 3A shows the values of biodegradation rate of the polymer according to Example 2 on different days, and Fig. 2 is relationship diagram between the biodegradation rate and the time of the polymer according to Example 2.

| Table 3A | |
|---|---|
| Time (day) | Biodegradation rate (%) |
| 0 | 0.00 |
| 1 | 5.28 |
| 2 | 14.57 |
| 3 | 23.34 |
| 4 | 28.44 |
| 5 | 30.39 |
| 7 | 31.62 |
| 8 | 36.91 |
| 9 | 39.08 |
| 10 | 40.07 |
| 11 | 39.68 |
| 12 | 42.43 |
| 13 | 46.03 |
| 15 | 50.96 |

(continued)

| Table 3A | |
|---|---|
| Time (day) | Biodegradation rate (%) |
| 16 | 53.95 |
| 17 | 56.99 |
| 18 | 58.03 |
| 19 | 59.71 |
| 21 | 60.35 |
| 22 | 62.31 |
| 23 | 64.09 |
| 24 | 66.05 |
| 25 | 66.05 |
| 26 | 66.05 |
| 28 | 67.42 |
| 31 | 68.12 |
| 35 | 67.89 |
| 38 | 68.60 |
| 42 | 68.47 |
| 45 | 68.32 |
| 49 | 68.07 |
| 52 | 68.52 |
| 56 | 69.21 |
| 59 | 68.48 |
| 64 | 68.60 |
| 67 | 68.83 |
| 71 | 68.54 |
| 74 | 67.29 |
| 78 | 68.10 |
| 81 | 67.92 |
| 85 | 68.82 |
| 88 | 68.20 |
| 92 | 67.27 |
| 95 | 65.54 |
| 99 | 64.82 |

The properties of the constituent monomers of the polymer and the polymer according to Example 2 are shown in Table 3B.

| Table 3B | |
|---|---|
| Constituent monomer 1 | 2-Hydroxyethyl Methacrylate (HEMA) |
| Constituent monomer 2 | Lactide |
| Constituent monomer 3 | Caprolactone |

(continued)

| Table 3B | |
|---|---|
| Mw (g/mol) | 2272 |
| Pt (°C) | 199 |
| Vi (cP) | 5078 |
| Sw (%) | 0.60 |
| Sp (nm) | 15.2 |
| PtC (°C) | 215 |
| Dr7 (%) | 31.62 |
| Dr28 (%) | 67.42 |
| Dr56 (%) | 68.52 |
| Dr99 (%) | 64.82 |
| TDr1p (day) | 1 |
| TDr50p (day) | 15 |

<Example 3>

The polymer of Example 3 is a biodegradable polymer, the constituent monomer of the polymer includes the 2-hydroxyethyl methacrylate, the lactide and the caprolactone, and the polymer of Example 3 has the structure shown in Formula (I) as above-mentioned.

Table 4 shows the properties of the constituent monomers of the polymer and the polymer according to Example 3.

| Table 4 | |
|---|---|
| Constituent monomer 1 | 2-Hydroxyethyl Methacrylate (HEMA) |
| Constituent monomer 2 | Lactide |
| Constituent monomer 3 | Caprolactone |
| Mw (g/mol) | 1600 |
| Pt (°C) | 193 |
| Vi (cP) | - |
| Sw (%) | - |
| Sp (nm) | - |
| PtC (°C) | - |
| Dr7 (%) | - |
| Dr28 (%) | - |
| Dr56 (%) | - |
| Dr99 (%) | - |
| TDr1p (day) | - |
| TDr50p (day) | - |

<Example 4>

The polymer of Example 4 is a biodegradable polymer, the constituent monomer of the polymer includes the 2-hydroxyethyl methacrylate, the lactide and the caprolactone, and the polymer of Example 4 has the structure shown in Formula (I) as above-mentioned.

Table 5 shows the properties of the constituent monomers of the polymer and the polymer according to Example 4.

| Table 5 | |
|---|---|
| Constituent monomer 1 | 2-Hydroxyethyl Methacrylate (HEMA) |
| Constituent monomer 2 | Lactide |
| Constituent monomer 3 | Caprolactone |
| Mw (g/mol) | 2018 |
| Pt (°C) | 182 |
| Vi (cP) | 12369 |
| Sw (%) | 0.15 |
| Sp (nm) | 15.3 |
| PtC (°C) | 214 |
| Dr7 (%) | - |
| Dr28 (%) | - |
| Dr56 (%) | - |
| Dr99 (%) | - |
| TDr1p (day) | - |
| TDr50p (day) | - |

<Example 5>

The polymer of Example 5 is a biodegradable polymer, the constituent monomer of the polymer includes the 2-hydroxyethyl methacrylate and at least one of the lactide and the caprolactone, and the polymer of Example 5 has the structure shown in Formula (II) as above-mentioned.

Table 6 shows the properties of the constituent monomers of the polymer and the polymer according to Example 5.

| Table 6 | |
|---|---|
| Constituent monomer 1 | 2-Hydroxyethyl Methacrylate (HEMA) |
| Constituent monomer 2 | |
| Constituent monomer 3 | Caprolactone |
| Mw (g/mol) | 5200 |
| Pt (°C) | 239 |
| Vi (cP) | - |
| Sw (%) | - |
| Sp (nm) | - |
| PtC (°C) | - |
| Dr7 (%) | - |
| Dr28 (%) | - |
| Dr56 (%) | - |
| Dr99 (%) | - |
| TDr1p (day) | - |
| TDr50p (day) | - |

<Example 6>

The polymer of Example 6 is a biodegradable polymer, the constituent monomer of the polymer includes the 2-hydroxyethyl methacrylate and at least one of the lactide and the caprolactone, and the polymer of Example 6 has the structure shown in Formula (II) as above-mentioned.

Table 7 shows the properties of the constituent monomers of the polymer and the polymer according to Example 6.

Table 7

| | |
|---|---|
| Constituent monomer 1 | 2-Hydroxyethyl Methacrylate (HEMA) |
| Constituent monomer 2 | |
| Constituent monomer 3 | Caprolactone |
| Mw (g/mol) | 7300 |
| Pt (°C) | 252 |
| Vi (cP) | - |
| Sw (%) | - |
| Sp (nm) | - |
| PtC (°C) | - |
| Dr7 (%) | - |
| Dr28 (%) | - |
| Dr56 (%) | - |
| Dr99 (%) | - |
| TDr1p (day) | - |
| TDr50p (day) | - |

<Example 7>

The polymer of Example 7 is a biodegradable polymer, the constituent monomer of the polymer includes the 2-hydroxyethyl methacrylate and at least one of the lactide and the caprolactone, and the polymer of Example 7 has the structure shown in Formula (II) as above-mentioned.

Table 8 shows the properties of the constituent monomers of the polymer and the polymer according to Example 7.

Table 8

| | |
|---|---|
| Constituent monomer 1 | 2-Hydroxyethyl Methacrylate (HEMA) |
| Constituent monomer 2 | |
| Constituent monomer 3 | Caprolactone |
| Mw (g/mol) | 3400 |
| Pt (°C) | 276 |
| Vi (cP) | - |
| Sw (%) | - |
| Sp (nm) | - |
| PtC (°C) | - |
| Dr7 (%) | - |
| Dr28 (%) | - |

(continued)

| Table 8 | |
|---|---|
| Dr56 (%) | - |
| Dr99 (%) | - |
| TDr1p (day) | - |
| TDr50p (day) | - |

<Example 8>

The polymer of Example 8 is a biodegradable polymer, the constituent monomer of the polymer includes the 2-hydroxyethyl methacrylate and at least one of the lactide and the caprolactone, and the polymer of Example 8 has the structure shown in Formula (II) as above-mentioned.

Table 9 shows the properties of the constituent monomers of the polymer and the polymer according to Example 8.

| Table 9 | |
|---|---|
| Constituent monomer 1 | 2-Hydroxyethyl Methacrylate (HEMA) |
| Constituent monomer 2 | |
| Constituent monomer 3 | Caprolactone |
| Mw (g/mol) | 21700 |
| Pt (°C) | 260 |
| Vi (cP) | - |
| Sw (%) | - |
| Sp (nm) | - |
| PtC (°C) | - |
| Dr7 (%) | - |
| Dr28 (%) | - |
| Dr56 (%) | - |
| Dr99 (%) | - |
| TDr1p (day) | - |
| TDr50p (day) | - |

<Example 9>

The polymer of Example 9 is a biodegradable polymer, the constituent monomer of the polymer includes the 2-hydroxyethyl methacrylate and at least one of the lactide and the caprolactone, and the polymer of Example 9 has the structure shown in Formula (II) as above-mentioned.

Table 10 shows the properties of the constituent monomers of the polymer and the polymer according to Example 9.

| Table 10 | |
|---|---|
| Constituent monomer 1 | 2-Hydroxyethyl Methacrylate (HEMA) |
| Constituent monomer 2 | |
| Constituent monomer 3 | Caprolactone |
| Mw (g/mol) | 11700 |
| Pt (°C) | 237 |

(continued)

| Table 10 | |
|---|---|
| Vi (cP) | - |
| Sw (%) | - |
| Sp (nm) | - |
| PtC (°C) | - |
| Dr7 (%) | - |
| Dr28 (%) | - |
| Dr56 (%) | - |
| Dr99 (%) | - |
| TDr1p (day) | - |
| TDr50p (day) | - |

<Example 10>

The polymer of Example 10 is a biodegradable polymer, the constituent monomer of the polymer includes the 2-hydroxyethyl methacrylate and at least one of the lactide and the caprolactone, and the polymer of Example 10 has the structure shown in Formula (II) as above-mentioned.

Table 11 shows the properties of the constituent monomers of the polymer and the polymer according to Example 10.

| Table 11 | |
|---|---|
| Constituent monomer 1 | 2-Hydroxyethyl Methacrylate (HEMA) |
| Constituent monomer 2 | |
| Constituent monomer 3 | Caprolactone |
| Mw (g/mol) | |
| Pt (°C) | 250 |
| Vi (cP) | - |
| Sw (%) | - |
| Sp (nm) | - |
| PtC (°C) | - |
| Dr7 (%) | - |
| Dr28 (%) | - |
| Dr56 (%) | - |
| Dr99 (%) | - |
| TDr1p (day) | - |
| TDr50p (day) | - |

<Example 11>

The polymer of Example 11 is a biodegradable polymer, the constituent monomer of the polymer includes the 2-hydroxyethyl methacrylate and at least one of the lactide and the caprolactone, and the polymer of Example 11 has the structure shown in Formula (II) as above-mentioned.

Table 12 shows the properties of the constituent monomers of the polymer and the polymer according to Example 11.

| Table 12 | |
|---|---|
| Constituent monomer 1 | 2-Hydroxyethyl Methacrylate (HEMA) |
| Constituent monomer 2 | |
| Constituent monomer 3 | Caprolactone |
| Mw (g/mol) | 2000 |
| Pt (°C) | 250 |
| Vi (cP) | - |
| Sw (%) | - |
| Sp (nm) | - |
| PtC (°C) | - |
| Dr7 (%) | - |
| Dr28 (%) | - |
| Dr56 (%) | - |
| Dr99 (%) | - |
| TDr1p (day) | - |
| TDr50p (day) | - |

<Example 12>

The polymer of Example 12 is a biodegradable polymer, the constituent monomer of the polymer includes the 2-hydroxyethyl methacrylate and at least one of the lactide and the caprolactone, and the polymer of Example 12 has the structure shown in Formula (II) as above-mentioned.

Table 13 shows the properties of the constituent monomers of the polymer and the polymer according to Example 12.

| Table 13 | |
|---|---|
| Constituent monomer 1 | 2-Hydroxyethyl Methacrylate (HEMA) |
| Constituent monomer 2 | |
| Constituent monomer 3 | Caprolactone |
| Mw (g/mol) | 2334 |
| Pt (°C) | 227 |
| Vi (cP) | - |
| Sw (%) | 0.24 |
| Sp (nm) | 11.7 |
| PtC (°C) | 257 |
| Dr7 (%) | - |
| Dr28 (%) | - |
| Dr56 (%) | - |
| Dr99 (%) | - |
| TDr1p (day) | - |
| TDr50p (day) | - |

**Claims**

1. A polymer being a biodegradable polymer, a constituent monomer of the polymer **characterized in** comprising a 2-hydroxyethyl methacrylate, a lactide and a caprolactone;
wherein an average molecular weight of the polymer is Mw, a degradation rate of the polymer on a 7th day is Dr7, and the following conditions are satisfied:

$$Mw \leq 50000 \text{ g/mole};$$

and

$$5\% \leq Dr7.$$

2. The polymer of claim 1, wherein the constituent monomer is selected from a group consisting of the 2-hydroxyethyl methacrylate, the lactide and the caprolactone.

3. The polymer of claims 1 or 2, wherein the average molecular weight of the polymer is Mw, and the following condition is satisfied:

$$300 \text{ g/mole} \leq Mw.$$

4. The polymer of any one of claims 1 to 3, wherein a pyrolysis temperature of the polymer is Pt, and the following condition is satisfied:

$$100°C \leq Pt.$$

5. The polymer of any one of claims 1 to 4, wherein a viscosity of the polymer is Vi, and the following condition is satisfied:

$$1000 \text{ cP} \leq Vi.$$

6. The polymer of any one of claims 1 to 5, wherein a dissolution rate in water of the polymer is Sw, and the following condition is satisfied:

$$Sw \leq 5.00\%.$$

7. The polymer of any one of claims 1 to 6, wherein a molecular size of the polymer is Sp, and the following condition is satisfied:

$$Sp \leq 30 \text{ µm}.$$

8. The polymer of any one of claims 1 to 7, wherein a pyrolysis temperature after curing of the polymer is PtC, and the following condition is satisfied:

$$100°C \leq PtC.$$

9. The polymer of any one of claims 1 to 8, wherein a degradation rate of the polymer on a 28th day is Dr28, and the following condition is satisfied:

$$10\% \leq Dr28.$$

10. The polymer of any one of claims 1 to 9, wherein a time for the polymer to reach a 1% degradation rate is TDr1p, and the following condition is satisfied:

$$TDr1p \leq 7 \text{ days.}$$

**11.** The polymer of any one of claims 1 to 10, wherein a time for the polymer to reach a 50% degradation rate is TDr50p, and the following condition is satisfied:

$$TDr50p \leq 30$$

days.

**12.** A composition, **characterized in** comprising:
the polymer of any one of claims 1 to 11.

**13.** A product, **characterized in** comprising:
the composition of claim 12.

**14.** A polymer being a biodegradable polymer, a constituent monomer of the polymer **characterized in** comprising:

a 2-hydroxyethyl methacrylate; and
at least one of a lactide and a caprolactone;
wherein a monomer proportion of the 2-hydroxyethyl methacrylate in the polymer is smaller than a monomer proportion of the lactide in the polymer or a monomer proportion of the caprolactone in the polymer;
wherein an average molecular weight of the polymer is Mw, a time for the polymer to reach a 1% degradation rate is TDr1p, and the following conditions are satisfied:

$$Mw \leq 50000 \text{ g/mole;}$$

and

$$TDr1p \leq 7$$

days.

**15.** The polymer of claim 14, wherein the constituent monomer of the polymer is composed of the 2-hydroxyethyl methacrylate and at least one of the lactide and the caprolactone.

**16.** The polymer of claims 14 or 15, wherein the average molecular weight of the polymer is Mw, and the following condition is satisfied:

$$300 \text{ g/mole} \leq Mw.$$

**17.** The polymer of any one of claims 14 to 16, wherein a pyrolysis temperature of the polymer is Pt, and the following condition is satisfied:

$$100°C \leq Pt.$$

**18.** The polymer of any one of claims 14 to 17, wherein a viscosity of the polymer is Vi, and the following condition is satisfied:

$$1000 \text{ cP} \leq Vi.$$

**19.** The polymer of any one of claims 14 to 18, wherein a dissolution rate in water of the polymer is Sw, and the following condition is satisfied:

$$Sw \leq 5.00\%.$$

**20.** The polymer of any one of claims 14 to 19, wherein a molecular size of the polymer is Sp, and the following condition is satisfied:

$$Sp \leq 50\ \mu m.$$

**21.** The polymer of any one of claims 14 to 20, wherein a pyrolysis temperature after curing of the polymer is PtC, and the following condition is satisfied:

$$100°C \leq PtC.$$

**22.** The polymer of any one of claims 14 to 21, wherein a degradation rate of the polymer on a 7th day is Dr7, and the following condition is satisfied:

$$5\% \leq Dr7.$$

**23.** The polymer of any one of claims 14 to 22, wherein a degradation rate of the polymer on a 28th day is Dr28, and the following condition is satisfied:

$$10\% \leq Dr28.$$

**24.** The polymer of any one of claims 14 to 23, wherein a time for the polymer to reach a 50% degradation rate is TDr50p, and the following condition is satisfied:

$$TDr50p \leq 30$$

days.

**25.** The polymer of any one of claims 14 to 24, wherein the average molecular weight of the polymer is Mw, a degradation rate of the polymer on a 7th day is Dr7, a degradation rate of the polymer on a 28th day is Dr28, a pyrolysis temperature of the polymer is Pt, a dissolution rate in water of the polymer is Sw, a pyrolysis temperature after curing of the polymer is PtC, and the following conditions are satisfied:

$$500\ g/mole \leq Mw \leq 10000\ g/mole;$$

$$20\% \leq Dr7 \leq 80\%;$$

$$30\% \leq Dr28 \leq 100\%;$$

$$200°C \leq Pt;$$

$$Sw \leq 0.50\%;$$

and

$$200°C \leq PtC.$$

**26.** A composition, **characterized in** comprising:
the polymer of any one of claims 14 to 25.

**27.** A product, **characterized in** comprising: the composition of claim 26.

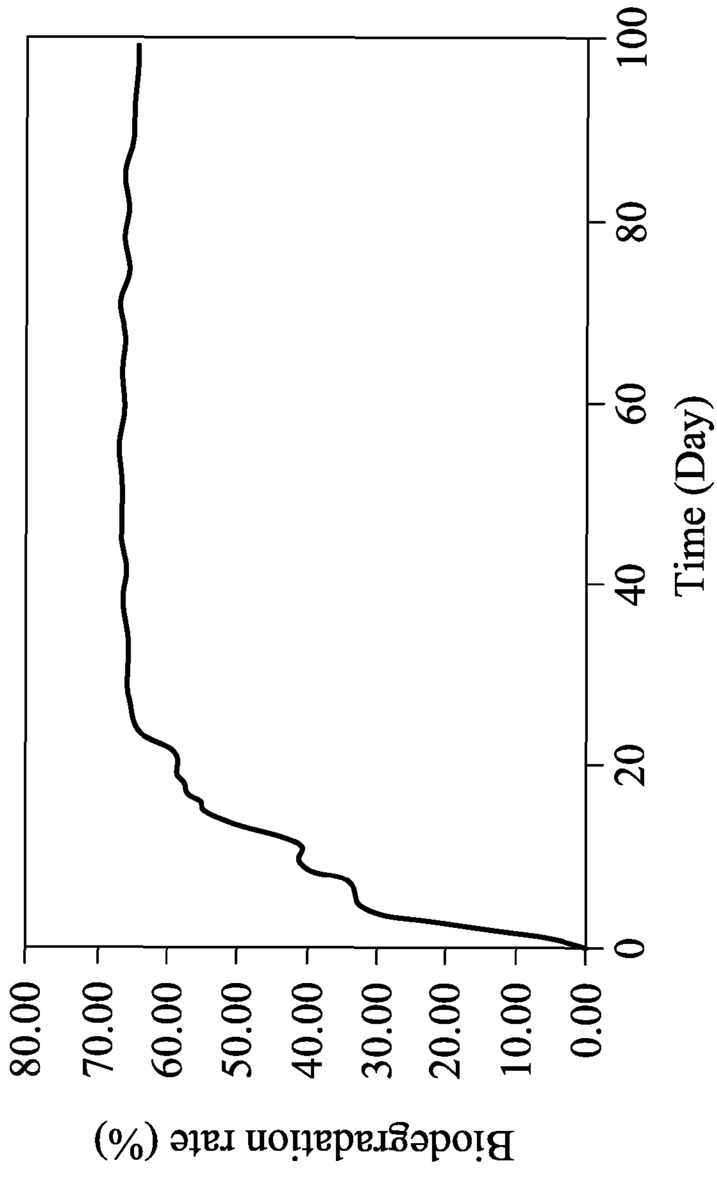
Biodegradation rate (%)
80.00
70.00
60.00
50.00
40.00
30.00
20.00
10.00
0.00
0
20
40
60
80
100
Time (Day)

Fig. 1

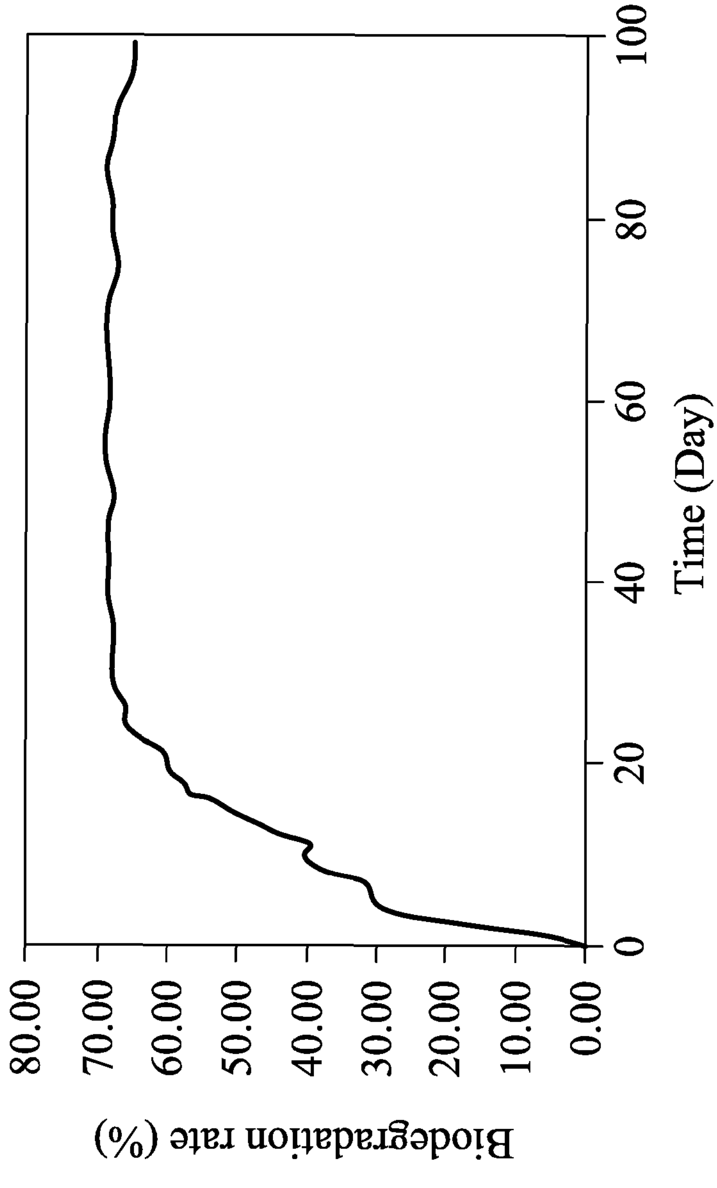
Biodegradation rate (%)
80.00
70.00
60.00
50.00
40.00
30.00
20.00
10.00
0.00
0
20
40
60
80
100
Time (Day)

Fig. 2

Europäisches Patentamt
European Patent Office
Office européen des brevets

# EUROPEAN SEARCH REPORT

Application Number
EP 24 19 1113

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GANG PU ET AL: "Polyacrylates with High Biomass Contents for Pressure-Sensitive Adhesives Prepared via Mini-emulsion Polymerization", INDUSTRIAL & ENGINEERING CHEMISTRY RESEARCH, vol. 51, no. 37, 19 September 2012 (2012-09-19), pages 12145-12149, XP055463438, ISSN: 0888-5885, DOI: 10.1021/ie301492v<br>* abstract *<br>* experimental section, results and discussion; figures 1-4 * | 1-27 | INV.<br>C08G63/08<br>C08G63/91<br><br>ADD.<br>C08F220/20 |
| X | Moore Roderquita K ET AL: "Biodegradability of Lactide Caprolactone Macromonomers in Wastewater", , 13 May 2021 (2021-05-13), pages 4081-4092, XP093232855, Retrieved from the Internet: URL:https://bioresources.cnr.ncsu.edu/resources/biodegradability-of-lactide-caprolactone-macromonomers-in-wastewater/ [retrieved on 2024-12-10]<br>* abstract *<br>* experimental, results and discussion, conclusion; figures 1-7; tables 1,2 * | 1-27 | TECHNICAL FIELDS SEARCHED (IPC)<br>C08G<br>C08F<br>C08J |
| X | US 2022/403079 A1 (LEIZA JOSÉ RAMÓN [ES] ET AL) 22 December 2022 (2022-12-22)<br>* paragraphs [0002] - [0005], [0020] - [0029], [0060] - [0080], [0460] - [0462], [0469] - [0553] *<br>* scheme 1, formula 5; figures 2A, 2B; tables 1-3, 3A, 4 * | 1-27 | |

-/--

The present search report has been drawn up for all claims

| Place of search | Date of completion of the search | Examiner |
|---|---|---|
| The Hague | 12 December 2024 | Dessemond, C |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 24 19 1113

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/210907 A1 (ZHANG JIGUANG [CN] ET AL) 30 July 2015 (2015-07-30)<br>* paragraphs [0003], [0006] - [0008], [0015] - [0036]; tables 1-4 *<br>----- | 1-27 | |
| X | CRETU A ET AL: "Synthesis and degradation of poly (2-hydroxyethyl methacrylate)-graft-poly (@e-caprolactone) copolymers",<br>POLYMER DEGRADATION AND STABILITY, BARKING, GB,<br>vol. 83, no. 3, 1 March 2004 (2004-03-01), pages 399-404, XP004490463,<br>ISSN: 0141-3910, DOI: 10.1016/J.POLYMDEGRADSTAB.2003.09.001<br>* abstract *<br>* experimental, results and discussion, schemes 1, 2 *<br>* figures 1-3; tables 1-3 *<br>----- | 14-27 | |

TECHNICAL FIELDS SEARCHED (IPC)

The present search report has been drawn up for all claims

| Place of search | Date of completion of the search | Examiner |
|---|---|---|
| The Hague | 12 December 2024 | Dessemond, C |

1

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

page 2 of 2

## ANNEX TO THE EUROPEAN SEARCH REPORT ON EUROPEAN PATENT APPLICATION NO. EP 24 19 1113

This annex lists the patent family members relating to the patent documents cited in the above-mentioned European search report. The members are as contained in the European Patent Office EDP file on
The European Patent Office is in no way liable for these particulars which are merely given for the purpose of information.

12-12-2024

| Patent document cited in search report | Publication date | Patent family member(s) | Publication date |
|---|---|---|---|
| US 2022403079 A1 | 22-12-2022 | EP 3980476 A1 | 13-04-2022 |
| | | ES 2946011 T3 | 11-07-2023 |
| | | US 2022403079 A1 | 22-12-2022 |
| | | WO 2021058122 A1 | 01-04-2021 |
| US 2015210907 A1 | 30-07-2015 | US 2015210907 A1 | 30-07-2015 |
| | | WO 2012021721 A2 | 16-02-2012 |

EPO FORM P0459

For more details about this annex : see Official Journal of the European Patent Office, No. 12/82